# EUROPÄISCHE PATENTSCHRIFT

(11) **EP 3 626 549 B1**
(45) Veröffentlichungstag und Bekanntmachung des Hinweises auf die Patenterteilung: **01.07.2026**
(21) Anmeldenummer: 19197926.9
(22) Anmeldetag: 18.09.2019
(51) Int. Cl.: B60R 25/24, G08C 17/02

(54) **IDENTIFIKATIONSGEBER FÜR EIN FAHRZEUG**
IDENTIFIER FOR A VEHICLE
IDENTIFICATEUR POUR VEHICULE

(30) Priorität: 20.09.2018 DE 102018123152; 07.12.2018 DE 102018131371
(43) Veröffentlichungstag der Anmeldung: 25.03.2020
(73) Patentinhaber: Huf Hülsbeck & Fürst GmbH & Co. KG, 42551 Velbert (DE)
(72) Erfinder: GORENZWEIG, Igor Alexander, 42109 Wuppertal (DE); Hild, Sven, 58089 Hagen (DE); Simon, Jörg, 42489 Wülfrath (DE); Koziol, Miroslaw, 42279 Wuppertal (DE)
(74) Vertreter: Bals & Vogel Patentanwälte PartGmbB

(56) Entgegenhaltungen:
- EP-B1- 1 044 400
- DE-A1- 102006 047 429
- FR-A1- 2 816 431
- US-A1- 2009 096 575
- US-A1- 2009 160 607
- US-A1- 2009 278 656
- US-A1- 2013 141 212

## Beschreibung

Die vorliegende Erfindung betrifft einen Identifikationsgeber zur Aktivierung wenigstens einer Fahrzeugfunktion bei einem Fahrzeug. Ferner bezieht sich die Erfindung auf ein System sowie ein Verfahren.

Es ist aus dem Stand der Technik bekannt, dass bei elektronischen Schlüsseln (Identifikationsgebern) zur Authentifizierung bei einem Fahrzeug mehrere Tasten vorgesehen sind, um Funktionen beim Fahrzeug zu aktivieren. So ist bspw. eine Taste zum Entriegeln als eine erste Funktion, eine weitere Taste zum Verriegeln als eine zweite Funktion und ggf. eine dritte Taste zur Aktivierung einer weiteren Funktion beim Fahrzeug vorgesehen. Die dritte Taste kann bspw. dazu ausgeführt sein, einen Alarm beim Fahrzeug auszulösen.

Gattungsgemäße Identifikationsgeber sind bspw. aus der DE 10 2010 037 361 A1 und der DE 196 19 975 C1 bekannt. Ferner sind aus den Druckschriften US 2009 / 278 656 A1 und US 2009 / 096 575 A1 gattungsgemäße Vorrichtungen und Verfahren bekannt.

Hierbei ist häufig ein Nachteil, dass die Flexibilität und/oder der Komfort bei der Nutzung dieser Funktionen noch eingeschränkt ist.

Es ist daher eine Aufgabe der vorliegenden Erfindung, die voranstehend beschriebenen Nachteile zumindest tlw. zu beheben. Insbesondere ist es eine Aufgabe der vorliegenden Erfindung, eine flexiblere und/oder komfortablere Verwendung des Identifikationsgebers zu ermöglichen.

Die voranstehende Aufgabe wird gelöst durch die Patentansprüche und insbesondere durch einen Identifikationsgeber mit den Merkmalen des unabhängigen Vorrichtungsanspruchs, ein System mit den Merkmalen des unabhängigen Systemanspruchs sowie ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Identifikationsgeber beschrieben sind, selbstverständlich auch im Zusammenhang mit dem erfindungsgemäßen System, dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch einen Identifikationsgeber (insbesondere primär) zur Aktivierung wenigstens einer Fahrzeugfunktion bei einem Fahrzeug, aufweisend:
- wenigstens eine Schnittstellenvorrichtung zum (insbesondere kontaktlosen und/oder unmittelbaren) Datenempfang von einem mobilen Kommunikationsgerät, wobei letzteres zur Mobilfunkkommunikation ausgebildet ist,
- wenigstens ein Fahrzeugfunktionsbedienmittel zur Aktivierung der wenigstens einen Fahrzeugfunktion, insbesondere als Primärfunktion,
- wenigstens ein Funktionsbedienmittel zur Aktivierung (wenigstens) einer variablen (ggf. austauschbaren) Funktion, insbesondere als Sekundärfunktion.

Hierbei ist insbesondere vorgesehen, dass der Identifikationsgeber dazu ausgeführt ist, die variable Funktion anhand des Datenempfangs (variabel) festzulegen. In anderen Worten kann die variable Funktion komfortabel durch das Kommunikationsgerät angepasst werden, sodass das Funktionsbedienmittel als ein programmierbares Bedienmittel des Identifikationsgebers ausgeführt sein kann. Das jeweilige Bedienmittel (z. B. das Fahrzeugfunktionsbedienmittel und/oder das Funktionsbedienmittel) kann dabei z. B. als Taste und/oder Sensor des Identifikationsgebers ausgebildet sein. Der Datenempfang kann z. B. dazu genutzt werden, dass der Identifikationsgeber Daten des Kommunikationsgerätes empfängt, welche wenigstens eine Information über die Belegung des Funktionsbedienmittels (d. h. über die variable Funktion) aufweisen können. In anderen Worten kann die variable Funktion unterschiedliche Funktionen bereitstellen, welche anhand des Datenempfangs festgelegt werden können. Dies ermöglicht eine deutliche Steigerung des Komforts und der Flexibilität bei der Nutzung des Identifikationsgebers.

Es kann dabei möglich sein, dass der Identifikationsgeber als eine Hauptfunktion eine Authentifizierung beim Fahrzeug aufweist. Hierzu kann das Fahrzeug z. B. ein aktives oder passives Zugangssystem bereitstellen, um über die Authentifizierung einen Zugang beim Fahrzeug (wie ein Entriegeln) zu ermöglichen. Bei einem aktiven Zugangssystem kann die Authentifizierung und/oder eine sicherheitsrelevante Funktion des Fahrzeuges (wie die Entriegelung bei erfolgreicher Authentifizierung) dann initiiert werden, wenn ein Bediener aktiv ein Fahrzeugsfunktionsbedienmittel des Identifikationsgebers bedient. Hierzu kann das Fahrzeugsfunktionsbedienmittel z. B. als Taste und/oder Sensor des Identifikationsgebers ausgebildet sein. Alternativ oder zusätzlich ist es möglich, dass (z. B. bei einem passiven Zugangssystem) eine solche aktive Bedienung nicht notwendig ist, um die Authentifizierung beim Fahrzeug zu initiieren und/oder die sicherheitsrelevante Fahrzeugfunktion zu aktivieren. In diesem Fall genügt es bspw., dass sich ein Bediener mit dem Identifikationsgeber an das Fahrzeug annähert, wobei diese Annäherung eine automatische Initiierung der Authentifizierung bewirken kann. Dies wird bspw. durch die Aussendung eines Wecksignals durch das Fahrzeug und durch eine Aussendung eines Antwortsignals als Reaktion auf das Wecksignal durch den Identifikationsgeber ermöglicht. Auch können hierzu bspw. Näherungssensoren, wie kapazitive Sensoren oder optische Sensoren des Fahrzeuges genutzt werden, um die Annäherung des Identifikationsgebers zu erfassen und als Reaktion auf die Annäherung das Wecksignal auszusenden. Entsprechend ist es möglich, dass das Fahrzeugfunktionsbedienmittel keinen bedienbaren Taster und/oder Sensor aufweist, sondern z. B. lediglich als interne Schnittstelle zum Empfang des Wecksignals beim Identifikationsgeber ausgebildet ist. Von Vorteil kann es ferner sein, wenn auch bei einem passiven Zugangssystem zusätzlich das Fahrzeugfunktionsbedienmittel in der Form eines durch den Bediener betätigbaren Elements, wie eines Tasters und/oder Sensors, ausgebildet ist, um zusätzlich zur passiven auch eine aktive Initiierung der Authentifizierung und/oder der sicherheitsrelevanten Fahrzeugfunktion bereitzustellen.

Das mobile Kommunikationsgerät ist zur Telefonie ausgeführt. Das mobile Kommunikationsgerät kann z. B. als ein tragbares Gerät zur Mobilfunkkommunikation, bspw. zur Internetkommunikation, ausgeführt sein. Es kann dabei möglich sein, dass ein erfindungsgemäßer Identifikationsgeber nicht zur Mobilfunkkommunikation ausgeführt ist, sodass ein Mobilfunk nicht als Technologie für den Datenempfang in Frage kommt. Entsprechend kann die Schnittstellenvorrichtung des Identifikationsgebers eine von der Mobilfunkkommunikation unterschiedlich ausgebildete Kommunikation, insbesondere Funkkommunikation, für den Datenempfang bereitstellen.

Es kann ferner möglich sein, dass das Fahrzeugfunktionsbedienmittel und das Funktionsbedienmittel jeweils ein Betätigungselement, insbesondere einen Taster und/oder Sensor, aufweisen. Das Fahrzeugfunktionsbedienmittel und das Funktionsbedienmittel können vorzugsweise hinsichtlich dieses Betätigungselements identisch ausgebildet sein, um z. B. eine einheitliche Bedienstruktur an einem Gehäuse des Identifikationsgebers auszubilden. Hierzu kann das Betätigungselement bspw. eine Beschriftung und/oder eine Bedruckung und/oder eine Kennzeichnung und/oder ein Symbol aufweisen, welche jeweils an die jeweilige Funktion des Fahrzeugsfunktionsbedienmittels bzw. Funktionbedienmittels angepasst ist. Zusätzlich kann das Fahrzeugfunktionsbedienmittel und/oder das Funktionsbedienmittel jeweils ggf. auch eine Elektronik aufweisen, welche die Aktivierung der jeweiligen Funktion (d. h. Fahrzeugfunktion bzw. variable Funktion) elektrisch initiiert.

Erfindungsgemäß ist bei dem Fahrzeugfunktionsbedienmittel die jeweils zugeordnete Fahrzeugfunktion fest (unveränderbar) vorgegeben. So kann bspw. ein erstes Fahrzeugsfunktionsbedienmittel vorgesehen sein, welches zur Aktivierung einer Fahrzeugentriegelung als eine erste Fahrzeugfunktion ausgebildet ist. Auch kann ein zweites Fahrzeugfunktionsbedienmittel vorgesehen sein, welches zur Aktivierung einer Fahrzeugverriegelung als eine zweite Fahrzeugfunktion ausgebildet ist.

Besonders bevorzugt ist bei dem Funktionsbedienmittel die hierdurch aktivierbare Funktion nicht fest vorgegeben, sondern kann variabel ausgetauscht werden. Es handelt sich somit um eine variable Funktion, welche angepasst und/oder festgelegt werden kann. In diesem Zusammenhang kann auch von einem programmierbaren Funktionsbedienmittel gesprochen werden. Dies ermöglicht es für einen Bediener des Identifikationsgebers, die durch das Funktionsbedienmittel aktivierbare Funktion selbst festzulegen.

Vorteilhaft kann es zudem sein, wenn das Fahrzeug als ein Kraftfahrzeug, insbesondere als ein Hybrid-Fahrzeug oder als ein Elektrofahrzeug, ausgebildet ist. Vorzugsweise kann das Fahrzeug ein Hochvolt-Bordnetz und/oder einen Elektromotor aufweisen. Zudem kann es möglich sein, dass das Fahrzeug als ein Brennstoffzellen-Fahrzeug und/oder als ein Personenkraftfahrzeug und/oder als ein semi-autonomes oder als ein autonomes Fahrzeug ausgebildet ist. Das Fahrzeug kann ggf. ein Sicherheitssystem aufweisen, welches z. B. durch eine Kommunikation mit dem Identifikationsgeber (ID-Geber) eine Authentifizierung ermöglicht. In Abhängigkeit von dieser Kommunikation und/oder von der Authentifizierung kann dann wenigstens eine Funktion des Fahrzeuges aktiviert werden. Falls hierzu die Authentifizierung des ID-Gebers notwendig ist, kann es sich bei der Funktion um eine sicherheitsrelevante Funktion handeln, wie z. B. ein Entriegeln des Fahrzeugs oder eine Freigabe eines Motorstarts. Das Sicherheitssystem kann dabei als ein passives Zugangssystem ausgebildet sein, welches ohne aktive manuelle Betätigung des ID-Gebers die Authentifizierung und/oder die Aktivierung der Funktion bei Detektion der Annäherung des ID-Gebers an das Fahrzeug initiiert. Hierzu kann bspw. wiederholt ein Wecksignal durch das Sicherheitssystem ausgesendet werden, welches dann durch den ID-Geber bei der Annäherung empfangen werden kann, um dann die Authentifizierung auszulösen. Auch kann die Funktion einer Aktivierung einer Fahrzeugbeleuchtung und/oder ein Betätigen (z. B. Öffnen oder Schließen) einer Klappe (z. B. Front- oder Heck- oder Seitenklappe bzw. Seitentür) betreffen. Vorteilhafterweise wird automatisch bei der Detektion der Annäherung die Fahrzeugbeleuchtung aktiviert und/oder bei der Detektion einer Geste eines Benutzers die Klappe betätigt.

In einer weiteren Möglichkeit kann vorgesehen sein, dass das wenigstens eine Fahrzeugfunktionsbedienmittel und/oder das Funktionsbedienmittel jeweils ein (insbesondere elektrisches) Tastelement aufweist, welches sich zumindest tlw. an einem Gehäuse des Identifikationsgebers erstreckt, um durch einen Bediener des Identifikationsgebers zur Aktivierung der Fahrzeugfunktion und/oder variablen Funktion manuell betätigt zu werden. Dies ermöglicht eine einfache Aktivierung der jeweiligen Funktion durch den Bediener. Anders als bei einer Aktivierung der Funktion z. B. durch ein Touch-Screen des Kommunikationsgeräts kann das Funktionsbedienmittel eine reduzierte und/oder vereinfachte und/oder schnellere Aktivierung der variablen Funktion ermöglichen. Dies ermöglicht es, eine für bestimmte Situationen komfortablere und/oder sicherere und/oder schnellere Auslösung der Funktion bereitzustellen (z. B. bei einer Notsituation, wenn die variable Funktion eine Panikfunktion oder eine Notruffunktion betrifft). Um das Funktionsbedienelement dafür zu kennzeichnen, dass es eine variable Funktion aktivieren kann, kann eine entsprechende Kennzeichnung für einen Bediener des Identifikationsgebers sichtbar am Funktionsbedienmittel angebracht sein. Hierzu weist das (z. B. elektrische) Tastelement bspw. eine Kunststofffläche auf, welche z. B. eine mittels Laserbeschriftung und/oder Lasergravur und/oder Laserstrukturierung aufgebrachte Kennzeichnung aufweist.

Ein (insbesondere elektrisches) Tastelement im Sinne dieser Erfindung kann vorteilhafterweise als ein elektrischer Taster ausgeführt sein, bei welchem eine Betätigung (Berührung oder Bewegung) anhand eines elektrischen Signals detektiert werden kann. Hierzu kann der Taster bspw. einen elektrischen Stromkreis schließen oder unterbrechen. Alternativ oder zusätzlich ist es möglich, dass das Tastelement einen Bereich und insbesondere eine Fläche definiert und/oder aufweist, welche zur Betätigung dient. So kann durch einen Sensor und/oder eine Elektronik des Tastelements eine Berührung dieses Bereichs und/oder eine Annäherung an diesen Bereich und/oder eine Geste in diesem Bereich und/oder dergleichen festgestellt werden, um die Betätigung des Tastelements zu detektieren. In anderen Worten kann das Tastelement auch wenigstens einen Sensor aufweisen, wie einen kapazitiven oder induktiven Sensor. In diesem Falle kann das Tastelement auch als kapazitives bzw. induktives Tastelement bezeichnet werden. Dies ermöglicht z. B. auch die Ausbildung des Tastelements zumindest als Teil eines Touchscreens.

Des Weiteren ist es im Rahmen der Erfindung optional möglich, dass der Identifikationsgeber wenigstens ein elektronisches Speicherelement aufweist, um wenigstens eine über den Datenempfang übertragene Information über die variable Funktion nicht-flüchtig zu speichern. Im einfachsten Fall kann es sich bei dieser Information um ein Kennzeichen handeln, welches indiziert, welche der möglichen Funktionen dem Funktionsbedienmittel als die variable Funktion zugeordnet ist. Dies setzt ggf. voraus, dass weitere Spezifikationen dieser Funktion im Identifikationsgeber vorgespeichert sind. Diese Spezifikationen können z. B. eine Vorgabe eines Datenpaketes umfassen, welches zur Aktivierung der Funktion an das Fahrzeug ausgesendet wird. Darüber hinaus ist es denkbar, dass die übertragene Information auch selbst wenigstens einen Teil der Spezifikationen aufweist, um die variable Funktion auszuführen. Auf diese Weise können z. B. auch neue Funktionen in den Identifikationsgeber übertragen werden.

Nach einer weiteren Möglichkeit kann vorgesehen sein, dass eine Verarbeitungsvorrichtung vorgesehen ist, und dazu ausgeführt ist, anhand des Datenempfangs die variable Funktion aus vorgegebenen Funktionen auszuwählen, vorzugsweise in Abhängigkeit von wenigstens einer über den Datenempfang übertragene Information. Die übertragene Information weist z. B. ein Kennzeichen als Hinweis darauf auf, welche der vorgegebenen Funktionen als die variable Funktion ausgewählt wird. Dies ermöglicht es, anhand einer vorgegebenen Sammlung von Funktionen die variable Funktion über das Kommunikationsgerät auszuwählen. Hierzu kann bspw. das Kommunikationsgerät in Kenntnis der vorgegebenen Funktionen dadurch sein, dass das Kommunikationsgerät eine an den Identifikationsgeber angepasste Software (Computerprogramm) aufweist.

Des Weiteren ist es denkbar, dass der Identifikationsgeber dazu ausgeführt ist, die variable Funktion als wenigstens eine der nachfolgenden Funktionen festzulegen, und vorzugsweise die wenigstens eine über den Datenempfang übertragene Information für wenigstens eine der nachfolgenden Funktionen spezifisch ist und/oder die vorgebebenen Funktionen wenigstens eine der nachfolgenden Funktionen umfassen:
- wenigstens eine Fahrzeugfunktion, insbesondere zur Aktivierung einer Funktion des Fahrzeuges, vorzugsweise einer Aktivierung einer Fahrzeugbeleuchtung und/oder Öffnung einer Heckklappe und/oder Verriegelung und/oder Entriegelung,
- wenigstens eine sicherheitsrelevante Fahrzeugfunktion, insbesondere zur Aktivierung einer sicherheitsrelevanten Funktion des Fahrzeuges, vorzugsweise einer Entriegelung und/oder eines Motorstarts und/oder einer Ortung und/oder einer autonomen Fahrfunktion,
- eine Panikfunktion, insbesondere zur Aktivierung eines Alarmsystems des Fahrzeuges und/oder zur Aktivierung einer Notruffunktion,
- eine Notruffunktion, vorzugsweise zur Initiierung einer Notrufkommunikation über eine Mobilfunkschnittstelle des Fahrzeuges und/oder des Identifikationsgebers,
- eine Mobilfunk- und/oder Taxiruffunktion, vorzugsweise zur Initiierung einer Mobilfunkkommunikation über eine Mobilfunkschnittstelle des Fahrzeuges und/oder des Identifikationsgebers,
- eine Funktion des Kommunikationsgeräts, vorzugsweise eine Funktion einer App des Kommunikationsgeräts,
- eine Smart Home Funktion, vorzugsweise zur Maschine-2-Maschine-Kommunikation und/oder zur Kommunikation mit einem Smart Home Gerät über eine Schnittstellenvorrichtung des Identifikationsgebers und/oder eines Schnittstellenmittels des Fahrzeuges,
- eine internetbasierte Funktionsaktivierung, vorzugsweise durch Initiierung einer Internetabfrage und/oder Internetkommunikation, bevorzugt über eine Mobilfunkschnittstelle des Identifikationsgebers und/oder einer Mobilfunk- und/oder Internetschnittstelle des Fahrzeuges,
- eine Garagentoröffnung, vorzugsweise durch Aussenden eines Funksignals über eine Funkschnittstelle des Identifikationsgebers und/oder des Fahrzeuges,
- eine Lichtfunktion, vorzugsweise durch Aktivierung einer Beleuchtung des Fahrzeuges, bevorzugt initiiert durch die Übertragung eines Aktivierungsbefehls über eine Schnittstellenvorrichtung des Identifikationsgebers an das Fahrzeug,
- eine Kommunikationsfunktion, insbesondere eine Übertragung eines Datenpakets über wenigstens eine der wenigstens einen Schnittstellenvorrichtung,
- eine Komfortfunktion, vorzugsweise eine Aktivierung einer Standheizung und/oder Sitzheizung und/oder einer Klimafunktion des Fahrzeuges,
- eine Automatisierungsfunktion, vorzugsweise eine Aktivierung einer internetbasierten Programmierung und/oder einer Ansteuerung weiterer Funktionen gemäß einem vorgegebenen Aktivierungsplan,
- eine Updatefunktion, vorzugsweise zum Überschreiben einer Betriebssoftware des Identifikationsgebers,
- eine autonome Fahrfunktion, vorzugsweise zur Initiierung eines automatischen Parkmanövers und/oder einer Fahrzeugnavigation,
- eine Assistentenfunktion, vorzugsweise eine Ausführung einer internetbasierten Suche,
- eine Berichtfunktion, vorzugsweise mittels einer Sprachausgabe beim Identifikationsgeber und/oder Fahrzeug, z. B. zum Berichten/Ausgeben von Fahrzeuginformationen oder Informationen bzw. Angaben der Assistentenfunktion,
- eine Fahrzeugsuchfunktion, vorzugsweise mittels einer Ortung des Fahrzeuges,
- eine Postfunktion,
- eine Entriegelungsfunktion eines Schließsystems außerhalb eines Fahrzeuges.

Auf diese Weise kann der Identifikationsgeber sehr flexibel für verschiedene variable Funktionen eingesetzt werden. Es wird dabei deutlich, dass die variablen Funktionen nicht auf Fahrzeugfunktionen beschränkt sein können, sondern ggf. auch weitere Geräte und/oder Systeme außerhalb des Fahrzeuges betreffen können.

Eine Postfunktion und/oder wenigstens eine der wenigstens einen (ggf. auch sicherheitsrelevanten) Fahrzeugfunktion (welche ggf. als die variable Funktion definiert werden kann) kann sich bspw. darauf beziehen, dass eine Entriegelungsfunktion am Fahrzeug aktiviert wird. Die Entriegelungsfunktion kann bspw. eine Funktion sein, bei welcher eine Drittauthentifizierung freigegeben und/oder nach erfolgreicher Drittauthentifizierung eine zumindest tlw. Entriegelung des Fahrzeuges erfolgt. Die Drittauthentifizierung ist eine zusätzliche Authentifizierung, bei welcher ggf. andere Codes und/oder Identifikationsgeber zum Einsatz kommen als bei der Authentifizierung zur vollständigen Entriegelung und/oder zum Motorstart. Die Drittauthentifizierung kann z. B. durch einen Paketboten oder dergleichen genutzt werden, um eine Heckklappe des Fahrzeuges und/oder ein Einwurf-Fach für Pakete am Fahrzeug zu entriegeln und/oder zu öffnen. Die Entriegelung und/oder Öffnung kann z. B. für eine bestimmte Zeitdauer nach der Aktivierung bestehen bleiben, und dann wieder in den Normalzustand (verriegelt bzw. geschlossen) überführt werden.

Auch ist es denkbar, dass die variable Funktion eine Entriegelungsfunktion eines Schließsystems außerhalb eines Fahrzeuges sein kann. So ist es möglich, dass bspw. über die Schnittstellenvorrichtung des Identifikationsgebers und/oder über die Schnittstelle des Fahrzeuges bei Aktivierung der Funktion ein Signal an dieses Schließsystem, z. B. eines Hauses und/oder eines Smart-Home-Systems und/oder einer Haustür, ausgesendet wird. Dies dient z. B. dazu, die Haustür zu entriegeln und/oder zu öffnen.

Zudem ist im Rahmen der Erfindung denkbar, dass eine Verarbeitungsvorrichtung mit der wenigstens einen Schnittstellenvorrichtung und/oder dem Fahrzeugfunktionsbedienmittel und dem Funktionsbedienmittel, und insbesondere mit dem wenigstens einen Speicherelement, verschaltet ist, um die Aktivierung der Fahrzeugfunktion und/oder der variablen Funktion über die wenigstens eine Schnittstellenvorrichtung durchzuführen. Hierzu kann die Verarbeitungsvorrichtung bspw. an einer Leiterplatte angeordnet sein, und über Leiterbahnen mit der Schnittstellenvorrichtung und/oder dem Fahrzeugfunktionsbedienmittel und/oder dem Funktionsbedienmittel und/oder dem Speicherelement elektrisch verbunden sein. Die Leiterplatte ist bspw. in einem Gehäuse des Identifikationsgebers geschützt vor äußeren Einflüssen und/oder Feuchtigkeit untergebracht. Dabei kann das Gehäuse Öffnungen für Tastelemente des Fahrzeugfunktionsbedienmittels und/oder des Funktionsbedienmittels aufweisen. Dies ermöglicht die Ausbildung des Identifikationsgebers als ein tragbares und/oder baueinheitliches Gerät.

Der Identifikationsgeber kann als ein elektronischer Schlüssel für das Fahrzeug und somit ggf. konkret an das Fahrzeug angepasst ausgebildet sein. Es kann möglich sein, dass der Identifikationsgeber ausschließlich das wenigstens eine (z. B. genau zwei) Fahrzeugfunktionsbedienmittel und/oder das wenigstens eine (z. B. genau ein) Funktionsbedienmittel als Taster und/oder Sensor und/oder als manuelle Eingabemöglichkeit aufweist. Auf diese Weise kann der Identifikationsgeber als ein kompaktes Gerät bereitgestellt werden. Alternativ oder zusätzlich ist es möglich, dass der Identifikationsgeber eine maximale Erstreckung (also ein Maximum der Erstreckung in irgendeiner Richtung, z. B. eine Höhe oder Breite) aufweist, welche höchstens der maximalen Erstreckung des Kommunikationsgeräts entspricht und/oder höchstens 10 cm oder 6 cm entspricht. Dies hat den Hintergrund, dass ein Bediener den Identifikationsgeber mobil mit sich führen kann, z. B. in einer Tasche. Zur Verbesserung der Mobilität kann alternativ oder zusätzlich ein Energiespeicher des Identifikationsgebers vorgesehen sein, um die Elektronik (wie die Verarbeitungsvorrichtung) des Identifikationsgebers mobil mit elektrischer Energie zu versorgen. Um die Kosten und die Komplexität zu verringern, kann ferner bei einem Identifikationsgeber auf ein Display oder ggf. auch auf ein Leuchtmittel wie eine LED oder dergleichen verzichtet werden.

Außerdem kann es im Rahmen der Erfindung von Vorteil sein, dass die wenigstens eine Schnittstellenvorrichtung zur Bereitstellung wenigstens einer der nachfolgenden Datenübertragungstechnologien ausgeführt ist:
- Bluetooth,
- BLE,
- NFC,
- USB,
- WLAN,
- UWB.

BLE bezeichnet dabei Bluetooth-Low-Energy, NFC bezeichnet Nearfield-Communication, USB bezeichnet Universal-Serial-Bus, WLAN bezeichnet Wireless-Local-Area-Network und UWB bezeichnet eine Ultra-Breitband-Technologie. Insbesondere kann es sich bei der Datenübertragungstechnologie der Schnittstellenvorrichtung um eine solche Datenübertragungstechnologie handeln, welche auch durch das Kommunikationsgerät bereitgestellt wird und/oder nicht durch das Fahrzeug bereitgestellt wird. Dies ermöglicht eine zuverlässige Anpassung der variablen Funktion durch das Kommunikationsgerät über die Schnittstellenvorrichtung bzw. über die Datenübertragungstechnologie.

Gemäß einem weiteren Vorteil kann vorgesehen sein, dass zusätzlich zur wenigstens einen Schnittstellenvorrichtung als (jeweils) eine erste Schnittstellenvorrichtung noch wenigstens eine weitere Schnittstellenvorrichtung, insbesondere zur Kommunikation mit dem Fahrzeug, zur Aktivierung der Fahrzeugfunktion und/oder der variablen Funktion vorgesehen ist, welche zur Bereitstellung wenigstens einer der nachfolgenden Datenübertragungstechnologien ausgeführt ist:
- HF,
- LF,
- Bluetooth,
- BLE,
- WLAN,
- UWB.

Dabei kann es auch möglich sein, dass sich die Datenübertragungstechnologie der weiteren Schnittstellenvorrichtung von der Datenübertragungstechnologie der (ersten) Schnittstellenvorrichtung zur Kommunikation mit dem Kommunikationsgerät unterscheidet. Damit kann der Vorteil erzielt werden, dass auch eine variable Funktion durch den Identifikationsgeber bereitgestellt werden kann, welche durch das Kommunikationsgerät nicht unmittelbar bereitgestellt werden kann.

Zur Aktivierung der Fahrzeugfunktion kann der Identifikationsgeber z. B. dazu ausgeführt sein, ein Antwortsignal oder ein weiteres Signal über die weitere Schnittstellenvorrichtung an das Fahrzeug zu übertragen, um die Authentifizierung und/oder die sicherheitsrelevante Funktion des Fahrzeuges (z. B. ein Entriegeln und/oder Verriegeln und/oder ein Motorstart) und/oder eine weitere Fahrzeugfunktion (wie ein Verriegeln und/oder eine Aktivierung einer Beleuchtung) zu initiieren.

Bei der variablen Funktion kann z. B. durch die jeweilige variable Funktion flexibel festgelegt sein, welche Schritte zur Aktivierung durchgeführt werden. Hierzu kann bspw. eine Spezifikation der jeweiligen Funktion genutzt werden. Diese spezifiziert z. B., welche der wenigstens einen (ersten oder weiteren) Schnittstellenvorrichtung genutzt wird, um wenigstens ein Signal und/oder Datenpaket auszusenden. Auch kann hierdurch spezifiziert sein, welchen Inhalt das wenigstens eine Signal und/oder Datenpaket hat.

Bspw. kann eine solche variable Funktion vorgesehen sein, bei welcher (bei Aktivierung) über die weitere Schnittstellenvorrichtung ein Signal oder Datenpaket von dem ID-Geber an das Fahrzeug übermittelt wird, um beim Fahrzeug eine Reaktion auf diese Übermittlung auszulösen. Diese Reaktion ist z. B. die Aktivierung einer (ggf. sicherheitsrelevanten) Fahrzeugfunktion, wie eine Ansteuerung eines Geräts des Fahrzeuges selbst. Auch kann als Reaktion eine weitere Übermittlung eines weiteren Signals und/oder Datenpakets durch das Fahrzeug durchgeführt werden. Diese weitere Übermittlung durch das Fahrzeug bewirkt z. B. eine Ansteuerung eines Geräts außerhalb des Fahrzeuges und/oder außerhalb des Identifikationsgebers, z. B. eines Smart Home Geräts und/oder eines Garagentor- oder Toröffners. Für diese weitere Übermittlung kann ggf. eine andere Übertragungstechnologie (z. B. eine internetbasierte Übertragung) genutzt werden, als bei der Übermittlung durch die weitere Schnittstellenvorrichtung.

Vorzugsweise kann vorgesehen sein, dass der Identifikationsgeber als eine Universalfernbedienung, vorzugsweise als Universalfunksender, ausgeführt ist. Dies hat den Vorteil, dass der Identifikationsgeber zur Bereitstellung einer Vielzahl variabler Funktionen genutzt werden kann. Das Funktionsbedienelement kann dabei zur Ansteuerung dieser Universal-Fernbedienung ausgeführt sein.

Ferner kann im Rahmen der Erfindung vorgesehen sein, dass der Identifikationsgeber dazu ausgeführt ist, wenigstens eine Fahrzeugfunktion als eine sicherheitsrelevante Fahrzeugfunktion zu aktivieren, welche vorzugsweise eine Authentifizierung beim Fahrzeug und/oder einen Codeversand an das Fahrzeug umfasst. Eine solche sicherheitsrelevante Fahrzeugfunktion betrifft insbesondere eine solche Funktion beim Fahrzeug, welche eine Authentifizierung voraussetzt. Es kann sich dabei bspw. um eine Entriegelung des Fahrzeuges und/oder um einen Motorstart am Fahrzeug handeln. Entsprechend können die Fahrzeugbedienmittel und/oder wenigstens eines der Fahrzeugfunktionsbedienmittel dazu ausgeführt sein, die Fahrzeugfunktion als eine sicherheitsrelevante Fahrzeugfunktion zu aktivieren. Auch kann ggf. wenigstens eine der variablen Funktionen als sicherheitsrelevante Fahrzeugfunktion ausgeführt sein. Dies ermöglicht es, auch sicherheitsrelevante Funktionen über das Kommunikationsgerät beim Identifikationsgeber programmieren zu können, auch wenn diese sicherheitsrelevanten Funktionen durch das Kommunikationsgerät selbst ggf. nicht unmittelbar ausgeführt werden können.

Bevorzugt kann im Rahmen der Erfindung vorgesehen sein, dass die wenigstens eine Schnittstellenvorrichtung und/oder eine weitere Schnittstellenvorrichtung die nachfolgenden Schnittstellen umfasst:
- eine Schnittstelle zum Empfang eines Wecksignals, vorzugsweise über LF oder UWB,
- eine Schnittstelle zum Aussenden eines Antwortsignals als Reaktion auf den Empfang des Wecksignals, vorzugsweise über HF oder Bluetooth, um eine Authentifizierung beim Fahrzeug durchzuführen.

Dies ermöglicht die Bereitstellung eines passiven Zugangssystems zur komfortablen Ansteuerung sicherheitsrelevanter Fahrzeugfunktionen.

Ebenfalls Gegenstand der Erfindung ist ein System zur Bereitstellung wenigstens einer Funktion bei einem mobilen Identifikationsgeber, aufweisend:
- den mobilen Identifikationsgeber zur Aktivierung wenigstens einer Funktion bei einem Fahrzeug, ferner aufweisend ein Funktionsbedienmittel zur Aktivierung einer variablen Funktion zusätzlich zur wenigstens einen Funktion,
- ein mobiles Kommunikationsgerät zur Mobilfunkkommunikation.

Hierbei ist vorgesehen, dass das Kommunikationsgerät eine Schnittstelle zur Datenübertragung an den Identifikationsgeber aufweist, um die variable Funktion anzupassen. Damit bringt ein erfindungsgemäßes System die gleichen Vorteile mit sich, wie sie ausführlich mit Bezug auf einen erfindungsgemäßen Identifikationsgeber beschrieben worden sind. Das erfindungsgemäße System weist einen erfindungsgemäßen Identifikationsgeber als den mobilen Identifikationsgeber auf.

Erfindungsgemäß ist das Kommunikationsgerät als Mobilfunkgerät, in Form eines Smartphones oder Tablets ausgeführt. Dabei kann das Kommunikationsgerät auch ein Computerprogramm (App) aufweisen, welches an den Identifikationsgeber angepasst und/oder zur Anpassung der variablen Funktion ausgeführt ist. Bspw. weist dabei das Kommunikationsgerät ein Speichermittel, insbesondere einen nicht-flüchtigen elektronischen Speicher, auf, um wenigstens eine der möglichen variablen Funktionen zu speichern.

Ebenfalls Gegenstand der Erfindung ist ein Verfahren zur Bereitstellung wenigstens einer Funktion bei einem mobilen Identifikationsgeber.

Hierbei ist vorgesehen, dass die nachfolgenden Schritte durchgeführt werden, vorzugsweise nacheinander in der angegebenen oder in beliebiger Reihenfolge, wobei einzelne Schritte auch wiederholt durchgeführt werden können:
- Übertragen einer Information über eine variable Funktion des Identifikationsgebers von einem mobilen Kommunikationsgerät an den Identifikationsgeber,
- Aktivieren der variablen Funktion anhand der übertragenen Information bei dem Identifikationsgeber, insbesondere wenn ein Funktionsbedienmittel des Identifikationsgebers z. B. manuell betätigt wird.

Damit bringt ein erfindungsgemäßes Verfahren die gleichen Vorteile mit sich, wie sie ausführlich mit Bezug auf ein erfindungsgemäßes System und/oder einen erfindungsgemäßen Identifikationsgeber beschrieben worden sind. Zudem kann ein erfindungsgemäßes Verfahren dazu dienen, einen erfindungsgemäßen Identifikationsgeber und/oder ein erfindungsgemäßes System zu betreiben.

Das Aktivieren der variablen Funktion erfolgt z. B. zumindest tlw. dadurch, dass eine Auswertung der übertragenen Information durchgeführt wird. Hierzu kann die übertragene Information z. B. nach der Übertragung in einem Datenspeicher des Identifikationsgebers nicht-flüchtig abgespeichert werden. Es kann möglich sein, dass die Abspeicherung derart erfolgt, dass auch nach einem Wechsel eines Energiespeichers des Identifikationsgebers die Information weiterhin gespeichert ist. Hierzu ist bspw. der Datenspeicher als ein Flash-Speicher oder als eine SD-Karte oder dergleichen ausgeführt.

Es kann bei dem Aktivieren der variablen Funktion ggf. eine Auswertung der übertragenen Information erfolgen, um wenigstens eine Auswahl der Funktion und/oder Spezifikation der Funktion zu ermitteln. Hierzu weist die Information z. B. ein Kennzeichen auf, welches indiziert, welche aus verschiedenen Funktionen (also einer Funktionssammlung) als die variable Funktion genutzt wird. In anderen Worten kann die Information das Auswählen einer Spezifikation für die variable Funktion steuern. Auch kann es möglich sein, dass die Information bereits zumindest einen Teil dieser Spezifikation umfasst. Anschließend kann durch die Auswertung die Spezifikation ausgewertet werden, um z. B. wenigstens eine der wenigstens einen Schnittstellenvorrichtung für ein Versenden eines Signals (z. B. Funksignals oder Datenpakets) auszuwählen und/oder den Inhalt des Signals festzulegen. Diese Inhalte der Spezifikation können bspw. mittels des Kommunikationsgeräts konfiguriert werden, und bspw. in der Form eines Datensatzes oder dergleichen als die Information bzw. Spezifikation vorliegen. Auch ist es möglich, dass das Kommunikationsgerät diese Information und/oder Spezifikation von einer Datenbank z. B. über eine Internetübertragung erhält, bevor die Information an den Identifikationsgeber übertragen wird.

Es ist möglich, dass bei der Aktivierung der variablen Funktion und/oder durch die Auswertung die nachfolgenden Schritte veranlasst werden:
- Optional: Auswählen wenigstens einer der wenigstens einen Schnittstelle des Identifikationsgebers, vorzugsweise anhand der übertragenen Information,
- Bereitstellen, z. B. Auswählen und/oder Generieren, eines Signals, insbesondere Datenpakets, vorzugsweise anhand der übertragenen und dann ggf. gespeicherten Information,
- Übertragen des Signals über die wenigstens eine (ausgewählte oder vorgegebene) Schnittstelle, z. B. an das Fahrzeug und/oder an ein weiteres Gerät, wie ein Smart Home Gerät und/oder an einen Internet-Server.

Optional kann wenigstens einer der nachfolgenden Schritte anschließend durchgeführt werden, jeweils durchgeführt z. B. durch das weitere Gerät und/oder durch das Fahrzeug:
- Empfangen des übertragenen Signals durch das Fahrzeug und/oder durch das weitere Gerät,
- Aktivieren einer (insbesondere Fahrzeug-) Funktion anhand des übertragenen Signals.

Zusätzlich können ggf. die nachfolgenden weiteren Schritte vorgesehen sein, jeweils durchgeführt z. B. durch das weitere Gerät und/oder durch das Fahrzeug:
- Optional: Auswählen wenigstens einer von wenigstens einer Schnittstelle des Fahrzeuges bzw. des Geräts, vorzugsweise anhand des übertragenen Signals,
- Bereitstellen, vorzugsweise Auswählen und/oder Generieren, eines weiteren Signals, insbesondere Datenpakets, bevorzugt anhand des übertragenen Signals,
- Übertragen des weiteren Signals über die wenigstens eine (ausgewählte oder vorgegebene) Schnittstelle, z. B. an das Fahrzeug und/oder an ein weiteres Gerät, wie ein Smart Home Gerät und/oder an einen Internet-Server.

Dies kann eine umfangreiche Automatisierung mittels der variablen Funktion ermöglichen, welche ggf. durch das Kommunikationsgerät programmiert werden kann. Das übertragene Signal kann ferner als Aktivierungsbefehl angesehen werden, welches die Bereitstellung der variablen Funktion bei dem Fahrzeug und/oder weiteren Gerät ermöglicht.

Ferner kann es im Rahmen der Erfindung vorgesehen sein, dass die übertragene Information wenigstens eine der nachfolgenden Informationen umfasst:
- eine Protokollinformation über ein Kommunikationsprotokoll für die variable Funktion,
- eine Spezifikation der variablen Funktion,
- eine Sammlung verschiedener möglicher variablen Funktionen,
- eine Authentifizierungsinformation zur Authentifizierung des Kommunikationsgerät beim Identifikationsgeber,
- eine Updateinformation zur Aktualisierung der Ausführung der variablen Funktion,
- eine Bedienkonfiguration, vorzugsweise eine Zeitdauer zur Konfigurierung der Bedienmindestdauer des Funktionsbedienmittels bis zur Aktivierung der variablen Funktion,
- eine Fahrzeuginformation zur Übertragung an das Fahrzeug zur Bereitstellung der variablen Funktion beim Fahrzeug.

Dies ermöglicht es, z. B. neben der Auswahl der konkreten variablen Funktion auch ggf. weitere Informationen (z. B. neue variable Funktionen) im Identifikationsgeber einzuspeichern.

Außerdem kann es im Rahmen der Erfindung von Vorteil sein, dass die variable Funktion zumindest tlw. beim Fahrzeug aktiviert und/oder bei Aktivierung durch das Fahrzeug ausgeführt wird. Entsprechend kann es möglich sein, dass nicht oder nicht nur der Identifikationsgeber die variable Funktion ausführt, sondern ggf. (zumindest einen Teil der) variablen Funktion beim Fahrzeug durchgeführt wird. Bspw. kann der Identifikationsgeber bei Aktivierung der variablen Funktion das Fahrzeug veranlassen, ein (insbesondere Funk-) Signal und/oder ein Datenpaket über eine Schnittstelle des Fahrzeuges auszusenden. Auf diese Weise kann das Fahrzeug z. B. Geräte in der Umgebung des Fahrzeuges und/oder über eine Internetverbindung ansteuern. Dies ermöglicht eine umfangreiche Automatisierung mittels der variablen Funktion.

Gemäß einem weiteren Vorteil kann vorgesehen sein, dass die variable Funktion dadurch aktiviert wird, dass ein Aktivierungsbefehl von einer Schnittstellenvorrichtung des Identifikationsgebers an das Fahrzeug übertragen wird, um insbesondere beim Fahrzeug die Ansteuerung eines Schnittstellenmittels zur Bereitstellung der variablen Funktion zu initiieren. Dies ermöglicht eine einfache Triggerung der variablen Funktion beim Fahrzeug, um z. B. ein Signal und/oder ein Datenpaket über das Schnittstellenmittel auszusenden. Dieses ausgesendete Signal und/oder Datenpaket kann bspw. durch ein weiteres Gerät in der Umgebung des Fahrzeuges, wie z. B. einem Garagentor oder dergleichen, empfangen werden. Hierzu kann das Schnittstellenmittel bspw. als HF- (High-Frequency) oder LF- (Low-Frequency) Schnittstelle ausgebildet sein. Auch ist es möglich, dass es sich bei dem weiteren Gerät um ein Smart Home Gerät oder dergleichen handelt, welches z. B. über eine Internetverbindung über das Schnittstellenmittel angesteuert wird.

Vorteilhafterweise kann im Rahmen der Erfindung vorgesehen sein, dass die variable Funktion bei Aktivierung zumindest tlw. eine Schnittstelle des Fahrzeuges zur Datenübertragung ansteuert. Auf diese Weise kann für die variable Funktion auch eine Schnittstelle des Fahrzeuges genutzt werden, welches eine Datenübertragungstechnologie bereitstellt, welche z. B. beim Identifikationsgeber und/oder beim Kommunikationsgerät nicht vorgesehen ist.

Außerdem ist es von Vorteil, wenn die variable Funktion, insbesondere allein, durch die übertragene Information angepasst und/oder ausgetauscht und/oder verändert wird, sodass verschiedene aus vorgegebenen Funktionen durch das Fahrzeugfunktionsbedienmittel variabel bereitgestellt werden, und bevorzugt während des Betriebs des Identifikationsgebers durch die Übertragung der Information umprogrammiert und/oder ausgetauscht werden. In anderen Worten es ist nicht notwendig, ein Gehäuse des Indentifikationsgebers zu öffnen und/oder eine Anpassung der Elektronik des Identifikationsgebers vorzunehmen. So kann allein durch einen Bediener des Identifikationsgebers mittels des Kommunikationsgeräts die Umprogrammierung und/oder der Austausch erfolgen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Seitenansicht eines Fahrzeuges mit einem erfindungsgemäßen System,
- Fig. 2: eine weitere schematische Seitenansicht eines Fahrzeuges mit einem erfindungsgemäßen System.

In den nachfolgenden Figuren werden für die gleichen technischen Merkmale auch von unterschiedlichen Ausführungsbeispielen die identischen Bezugszeichen verwendet.

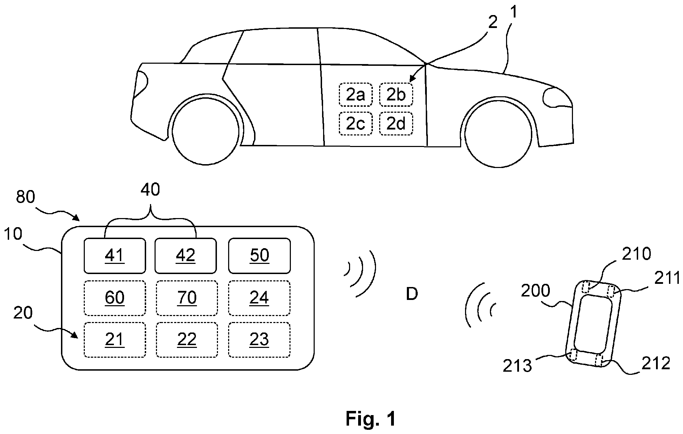

In Fig. 1 ist schematisch ein Fahrzeug 1 in einer Seitenansicht gezeigt. Ferner ist ein erfindungsgemäßes System gezeigt, welches zumindest einen Identifikationsgeber 10 und ein Kommunikationsgerät 200 umfassen kann. Der Identifikationsgeber 10 kann dabei zur Aktivierung wenigstens einer Fahrzeugfunktion bei dem Fahrzeug 1 ausgeführt sein, und hierzu wenigstens ein Fahrzeugfunktionsbedienmittel 40 zur Aktivierung der wenigstens einen Fahrzeugfunktion aufweisen. Darüber hinaus kann wenigstens eine Schnittstellenvorrichtung 20 zum kontaktlosen Datenempfang von einem mobilen Kommunikationsgerät 200 vorgesehen sein. Das Kommunikationsgerät 200 dient dabei z. B. zur Mobilfunkkommunikation, und weist hierzu eine Mobilfunkschnittstelle 211 als eine erste Schnittstelle 210 auf. Ferner kann eine weitere Schnittstelle 212, insbesondere Bluetooth-Schnittstelle 212, zur Datenübertragung an die Schnittstellenvorrichtung 20 des Identifikationsgebers 10 vorgesehen sein. Der Identifikationsgeber 10 weist dabei wenigstens ein Funktionsbedienmittel 50 auf, welches zur Aktivierung einer variablen Funktion (des Fahrzeuges oder unabhängig vom Fahrzeug) ausgebildet sein. Der Identifikationsgeber 10 kann dabei dazu ausgeführt sein, die variable Funktion anhand des Datenempfangs festzulegen. In anderen Worten kann das Kommunikationsgerät 200 dazu dienen, mittels der Schnittstelle 210 zur Datenübertragung D an den Identifikationsgeber 10 die variable Funktion anzupassen. Der Identifikationsgeber 10 kann wenigstens ein elektronisches Speicherelement 60 aufweist, um wenigstens eine über den Datenempfang übertragene Information über die variable Funktion nicht-flüchtig zu speichern. Zur Auswertung dieser Information und/oder Bereitstellung der variablen Funktion kann ferner eine Verarbeitungsvorrichtung 70 vorgesehen sein. Diese kann z. B. in einem Gehäuse 80 des Identifikationsgebers 10 untergebracht sein.

Neben der Schnittstellenvorrichtung 20 kann der Identifikationsgeber 10 ggf. auch weitere Schnittstellenvorrichtungen 20 aufweisen. Mögliche Schnittstellenvorrichtungen 20 sind bspw. eine HF-Schnittstelle 21 und/oder eine LF-Schnittstelle 22 und/oder eine Bluetooth-Schnittstelle 23. Diese können zur Datenübertragung D zwischen dem Kommunikationsgerät 200 dienen, oder ggf. zur Kommunikation mit dem Fahrzeug 1 genutzt werden. Für diese Kommunikation mit dem Fahrzeug 1 weist das Fahrzeug 1 wenigstens ein Schnittstellenmittel 2 auf, welches z. B. ein erstes Schnittstellenmittel 2a und/oder ein zweites Schnittstellenmittel 2b und/oder ein drittes Schnittstellenmittel 2c und/oder ein viertes Schnittstellenmittel 2d sein kann. Bspw. wird dabei eine LF-Schnittstelle 2b zur Aussendung eines Weck-Signals genutzt, und eine HF-Schnittstelle 2c zum Empfang eines Antwortsignals des Identifikationsgebers 10 verwendet. Die Aktivierung der variablen Funktion kann bspw. auch über eine weitere Datenübertragungstechnologie erfolgen, z. B. durch Aussendung eines Signals über eine Bluetooth-Schnittstelle 23 des Identifikationsgebers 10 an das erste Schnittstellenmittel 2a, z. B. in der Form einer Bluetooth-Schnittstelle 2a des Fahrzeuges 1.

Um wenigstens eine Fahrzeugfunktion, und insbesondere sicherheitsrelevante Funktionen (wie das Aussenden des Antwortsignals) zu bewirken, kann z. B. wenigstens ein Fahrzeugfunktionsbedienmittel 40 des Identifikationsgebers 10 betätigt werden. Ein erstes Bedienmittel 41 kann bspw. zum Entriegeln und ein zweites Bedienmittel 42 zum Verriegeln des Fahrzeuges betätigt werden. Zusätzlich kann das Funktionsbedienmittel 50 zur Bereitstellung verschiedener Funktionen dienen, welche z. B. mittels der Datenübertragung D und/oder durch das Kommunikationsgerät 200 ausgewählt werden.

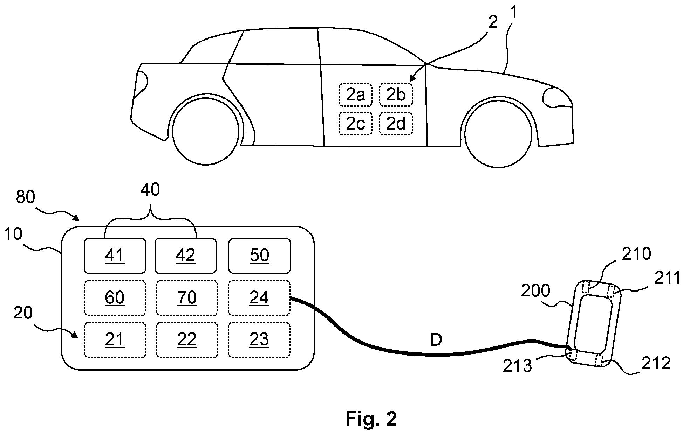

In Figur 2 ist gezeigt, dass auch eine USB-Schnittstelle 24 des Identifikationsgebers 10 gemeinsam mit einer USB-Schnittstelle 213 des Kommunikationsgeräts 200 genutzt werden kann, um die Datenübertragung D als eine USB-Datenübertragung kabelgebunden durchzuführen. In anderen Worten kann hierbei der Datenempfang kabelgebunden anstatt kontaktlos erfolgen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Schnittstellenmittel

- 2a: erstes Schnittstellenmittel, Bluetooth-Schnittstelle
- 2b: zweites Schnittstellenmittel, LF-Schnittstelle
- 2c: drittes Schnittstellenmittel, HF-Schnittstelle
- 2d: viertes Schnittstellenmittel, Mobilfunkschnittstelle, Internetschnittstelle

- 10: Identifikationsgeber

- 20: Schnittstellenvorrichtung
- 21: HF-Schnittstelle
- 22: LF-Schnittstelle
- 23: Bluetooth-Schnittstelle
- 24: USB-Schnittstelle

- 40: Fahrzeugfunktionsbedienmittel
- 41: erstes Bedienmittel
- 42: zweites Bedienmittel

- 50: Funktionsbedienmittel

- 60: Speicherelement

- 70: Verarbeitungsvorrichtung

- 80: Gehäuse

- 200: Kommunikationsgerät
- 210: Schnittstelle
- 211: Mobilfunkschnittstelle
- 212: Bluetooth-Schnittstelle
- 213: USB-Schnittstelle

- D: Datenübertragung

## Patentansprüche

1. Identifikationsgeber (10) zur Aktivierung wenigstens einer Fahrzeugfunktion bei einem Fahrzeug (1), aufweisend:
- wenigstens eine Schnittstellenvorrichtung (20) zum Datenempfang von einem mobilen Kommunikationsgerät (200) zur Mobilfunkkommunikation, wobei das mobile Kommunikationsgerät (200) zur Telefonie und in Form eines Smartphones oder Tablets ausgeführt ist,
- wenigstens ein Fahrzeugfunktionsbedienmittel (40) zur Aktivierung der wenigstens einen Fahrzeugfunktion, wobei bei dem Fahrzeugfunktionsbedienmittel (40) die jeweils zugeordnete Fahrzeugfunktion unveränderbar vorgegeben ist,
- wenigstens ein Funktionsbedienmittel (50) zur Aktivierung einer variablen Funktion, wobei der Identifikationsgeber (10) dazu ausgeführt ist, die variable Funktion anhand des Datenempfangs festzulegen.

2. Identifikationsgeber (10) nach Anspruch 1,
**dadurch gekennzeichnet,**
**dass** das wenigstens eine Fahrzeugfunktionsbedienmittel (40) und/oder das Funktionsbedienmittel (50) jeweils ein Tastelement aufweist, welches sich zumindest tlw. an einem Gehäuse (80) des Identifikationsgebers (10) erstreckt, um durch einen Bediener des Identifikationsgebers (10) zur Aktivierung der Fahrzeugfunktion und/oder variablen Funktion manuell betätigt zu werden,
und/oder dass der Identifikationsgeber (10) wenigstens ein elektronisches Speicherelement (60) aufweist, um wenigstens eine über den Datenempfang übertragene Information über die variable Funktion nicht-flüchtig zu speichern,
und/oder dass eine Verarbeitungsvorrichtung (70) vorgesehen ist, und dazu ausgeführt ist, anhand des Datenempfangs die variable Funktion aus vorgegebenen Funktionen auszuwählen, vorzugsweise in Abhängigkeit von wenigstens einer über den Datenempfang übertragene Information.

3. Identifikationsgeber (10) nach einem der vorhergehenden Ansprüche,
**dadurch gekennzeichnet,**
**dass** der Identifikationsgeber (10) dazu ausgeführt ist, die variable Funktion als wenigstens eine der nachfolgenden Funktionen festzulegen, und vorzugsweise die wenigstens eine über den Datenempfang übertragene Information für wenigstens eine der nachfolgenden Funktionen spezifisch ist und/oder die vorgebebenen Funktionen wenigstens eine der nachfolgenden Funktionen umfassen:
- eine Fahrzeugfunktion, insbesondere zur Aktivierung einer Funktion des Fahrzeuges, vorzugsweise einer Aktivierung einer Fahrzeugbeleuchtung und/oder Öffnung einer Heckklappe und/oder Verriegelung und/oder Entriegelung,
- eine sicherheitsrelevante Fahrzeugfunktion, insbesondere zur Aktivierung einer sicherheitsrelevanten Funktion des Fahrzeuges, vorzugsweise einer Entriegelung und/oder eines Motorstarts und/oder einer Ortung und/oder einer autonomen Fahrfunktion,
- eine Panikfunktion, insbesondere zur Aktivierung eines Alarmsystems des Fahrzeuges und/oder zur Aktivierung einer Notruffunktion,
- eine Notruffunktion, vorzugsweise zur Initiierung einer Notrufkommunikation über eine Mobilfunkschnittstelle (2d) des Fahrzeuges (1) und/oder des Identifikationsgebers (10),
- eine Mobilfunk- und/oder Taxiruffunktion, vorzugsweise zur Initiierung einer Mobilfunkkommunikation über eine Mobilfunkschnittstelle (2d) des Fahrzeuges (1) und/oder des Identifikationsgebers (10),
- eine Funktion des Kommunikationsgeräts (200), vorzugsweise eine Funktion einer App des Kommunikationsgeräts (200),
- eine Smart Home Funktion, vorzugsweise zur Maschine-2-Maschine-Kommunikation und/oder zur Kommunikation mit einem Smart Home Gerät über eine Schnittstellenvorrichtung (20) des Identifikationsgebers (10) und/oder eines Schnittstellenmittels (2) des Fahrzeuges (1),
- eine internetbasierte Funktionsaktivierung, vorzugsweise durch Initiierung einer Internetabfrage und/oder Internetkommunikation, bevorzugt über eine Mobilfunkschnittstelle (211) des Identifikationsgebers (10) und/oder einer Mobilfunk- und/oder Internetschnittstelle (2d) des Fahrzeuges (1),
- eine Garagentoröffnung, vorzugsweise durch Aussenden eines Funksignals über eine Funkschnittstelle des Identifikationsgebers (10) und/oder des Fahrzeuges (1),
- eine Lichtfunktion, vorzugsweise durch Aktivierung einer Beleuchtung des Fahrzeuges (1), bevorzugt initiiert durch die Übertragung eines Aktivierungsbefehls über eine Schnittstellenvorrichtung (20) des Identifikationsgebers (10) an das Fahrzeug (1),
- eine Kommunikationsfunktion, insbesondere eine Übertragung eines Datenpakets über wenigstens eine der wenigstens einen Schnittstellenvorrichtung (20),
- eine Komfortfunktion, vorzugsweise eine Aktivierung einer Standheizung und/oder Sitzheizung und/oder einer Klimafunktion des Fahrzeuges (1),
- eine Automatisierungsfunktion, vorzugsweise eine Aktivierung einer internetbasierten Programmierung und/oder einer Ansteuerung weiterer Funktionen gemäß einem vorgegebenen Aktivierungsplan,
- eine Updatefunktion, vorzugsweise zum Überschreiben einer Betriebssoftware des Identifikationsgebers (10),
- eine autonome Fahrfunktion, vorzugsweise zur Initiierung eines automatischen Parkmanövers und/oder einer Fahrzeugnavigation,
- eine Assistentenfunktion, vorzugsweise eine Ausführung einer internetbasierten Suche,
- eine Berichtfunktion, vorzugsweise mittels einer Sprachausgabe beim Identifikationsgeber (10) und/oder Fahrzeug (1),
- eine Fahrzeugsuchfunktion, vorzugsweise mittels einer Ortung des Fahrzeuges (1).

4. Identifikationsgeber (10) nach einem der vorhergehenden Ansprüche,
**dadurch gekennzeichnet,**
**dass** eine Verarbeitungsvorrichtung (70) mit der wenigstens einen Schnittstellenvorrichtung (20) und/oder dem Fahrzeugfunktionsbedienmittel (40) und dem Funktionsbedienmittel (50), und insbesondere mit dem wenigstens einen Speicherelement (60), verschaltet ist, um die Aktivierung der Fahrzeugfunktion und/oder der variablen Funktion über die wenigstens eine Schnittstellenvorrichtung (20) durchzuführen.

5. Identifikationsgeber (10) nach einem der vorhergehenden Ansprüche,
**dadurch gekennzeichnet,**
**dass** die wenigstens eine Schnittstellenvorrichtung (20) zur Bereitstellung wenigstens einer der nachfolgenden Datenübertragungstechnologien ausgeführt ist:
- Bluetooth,
- BLE,
- NFC,
- USB,
- WLAN,
- UWB,
und/oder dass zusätzlich zur wenigstens einen Schnittstellenvorrichtung (20) als eine erste Schnittstellenvorrichtung (20) noch wenigstens eine weitere Schnittstellenvorrichtung (20), insbesondere zur Kommunikation mit dem Fahrzeug (1), zur Aktivierung der Fahrzeugfunktion und/oder der variablen Funktion vorgesehen ist, welche zur Bereitstellung wenigstens einer der nachfolgenden Datenübertragungstechnologien ausgeführt ist:
- HF,
- LF,
- Bluetooth,
- BLE,
- WLAN,
- UWB.

6. Identifikationsgeber (10) nach einem der vorhergehenden Ansprüche,
**dadurch gekennzeichnet,**
**dass** der Identifikationsgeber (10) als eine Universalfernbedienung, vorzugsweise als Universalfunksender, ausgeführt ist,
und/oder dass der Identifikationsgeber (10) dazu ausgeführt ist, wenigstens eine Fahrzeugfunktion als eine sicherheitsrelevante Fahrzeugfunktion zu aktivieren, welche vorzugsweise eine Authentifizierung beim Fahrzeug (1) und/oder einen Codeversand an das Fahrzeug (1) umfasst.
Identifikationsgeber (10) nach einem der vorhergehenden Ansprüche,
**dadurch gekennzeichnet,**
**dass** die wenigstens eine Schnittstellenvorrichtung (20) und/oder eine weitere Schnittstellenvorrichtung (20) die nachfolgenden Schnittstellen umfasst:
- eine Schnittstelle zum Empfang eines Wecksignals, vorzugsweise über LF oder UWB,
- eine Schnittstelle zum Aussenden eines Antwortsignals als Reaktion auf den Empfang des Wecksignals, vorzugsweise über HF oder Bluetooth, um eine Authentifizierung beim Fahrzeug (1) durchzuführen.

7. System zur Bereitstellung wenigstens einer Funktion bei einem mobilen Identifikationsgeber (10) nach einem der vorhergehenden Ansprüche, aufweisend:
- den mobilen Identifikationsgeber (10) zur Aktivierung wenigstens einer Funktion bei einem Fahrzeug (1), ferner aufweisend ein Funktionsbedienmittel (50) zur Aktivierung einer variablen Funktion zusätzlich zur wenigstens einen Funktion und ein Fahrzeugfunktionsbedienmittel (40) zur Aktivierung der wenigstens einen Fahrzeugfunktion, wobei bei dem Fahrzeugfunktionsbedienmittel (40) die jeweils zugeordnete Fahrzeugfunktion unveränderbar vorgegeben ist,
- ein mobiles Kommunikationsgerät (200) zur Mobilfunkkommunikation, wobei das Kommunikationsgerät (200) eine Schnittstelle (210) zur Datenübertragung (D) an den Identifikationsgeber (10) aufweist, um die variable Funktion anzupassen,
wobei das Kommunikationsgerät (200) als Mobilfunkgerät in Form eines Smartphones oder Tablets, ausgeführt ist.

8. Verfahren zur Bereitstellung wenigstens einer Funktion bei einem mobilen Identifikationsgeber (10) nach einem der Ansprüche 1-7, wobei die nachfolgenden Schritte durchgeführt werden:
- Übertragen einer Information über eine variable Funktion des Identifikationsgebers (10) von einem mobilen Kommunikationsgerät (200) an den Identifikationsgeber (10), wobei das mobile Kommunikationsgerät (200) zur Telefonie und in Form eines Smartphones oder Tablets ausgeführt ist,
- Aktivieren der variablen Funktion anhand der übertragenen Information bei dem Identifikationsgeber (10), wenn ein Funktionsbedienmittel (50) des Identifikationsgebers (10) betätigt wird, wobei der mobile Identifikationsgeber (10) ein Fahrzeugfunktionsbedienmittel (40) zur Aktivierung der wenigstens einen Fahrzeugfunktion aufweist, wobei bei dem Fahrzeugfunktionsbedienmittel (40) die jeweils zugeordnete Fahrzeugfunktion unveränderbar vorgegeben ist.

9. Verfahren nach einem der vorhergehenden Ansprüche,
**dadurch gekennzeichnet,**
**dass** die übertragene Information wenigstens eine der nachfolgenden Informationen umfasst:
- eine Protokollinformation über ein Kommunikationsprotokoll für die variable Funktion,
- eine Spezifikation der variablen Funktion,
- eine Sammlung verschiedener möglicher variablen Funktionen,
- eine Authentifizierungsinformation zur Authentifizierung des Kommunikationsgeräts (200) beim Identifikationsgeber (10),
- eine Updateinformation zur Aktualisierung der Ausführung der variablen Funktion,
- eine Bedienkonfiguration, vorzugsweise eine Zeitdauer zur Konfigurierung der Bedienmindestdauer des Funktionsbedienmittels (50) bis zur Aktivierung der variablen Funktion,
- eine Fahrzeuginformation zur Übertragung an das Fahrzeug (1) zur Bereitstellung der variablen Funktion beim Fahrzeug (1).

10. Verfahren nach einem der vorhergehenden Ansprüche,
**dadurch gekennzeichnet,**
**dass** die variable Funktion zumindest tlw. beim Fahrzeug (1) aktiviert und bei Aktivierung durch das Fahrzeug (1) ausgeführt wird.

11. Verfahren nach einem der vorhergehenden Ansprüche,
**dadurch gekennzeichnet,**
**dass** die variable Funktion dadurch aktiviert wird, dass ein Aktivierungsbefehl von einer Schnittstellenvorrichtung (20) des Identifikationsgebers (10) an das Fahrzeug (1) übertragen wird, um insbesondere beim Fahrzeug (1) die Ansteuerung eines Schnittstellenmittels (2) zur Bereitstellung der variablen Funktion zu initiieren, und/oder dass die variable Funktion bei Aktivierung zumindest tlw. eine Schnittstelle (210) des Fahrzeuges (1) zur Datenübertragung (D) ansteuert,
und/oder dass die variable Funktion, insbesondere allein, durch die übertragene Information angepasst und/oder ausgetauscht und/oder verändert wird, sodass verschiedene aus vorgegebenen Funktionen durch das Fahrzeugfunktionsbedienmittel (40) variabel bereitgestellt werden, und bevorzugt während des Betriebs des Identifikationsgebers (10) durch die Übertragung der Information umprogrammiert und/oder ausgetauscht werden,
und/oder dass ein System und/oder Identifikationsgeber (10) nach einem der vorhergehenden Ansprüche betrieben wird.

## Claims

1. An identification transmitter (10) for activating at least one vehicle function in a vehicle (1), comprising:
- at least one interface device (20) for receiving data from a mobile communication device (200) for mobile communication, wherein the mobile communication device (200) is designed for telephony and is in the form of a smartphone or tablet,
- at least one vehicle function control means (40) for activating the at least one vehicle function, wherein the respective associated vehicle function is predefined in a non-modifiable manner for the vehicle function control means (40),
- at least one function control means (50) for activating a variable function,
wherein the identification transmitter (10) is configured to determine the variable function based on the received data.

2. Identification transmitter (10) according to claim 1,
**characterized in that**
the at least one vehicle function control means (40) and/or the function control means (50) each comprises a pushbutton element that extends at least partially along a housing (80) of the identification transmitter (10) to be manually actuated by an operator of the identification transmitter (10) to activate the vehicle function and/or variable function,
and/or that the identification transmitter (10) comprises at least one electronic memory element (60) for non-volatilely storing at least one piece of information regarding the variable function transmitted via the data reception,
and/or that a processing device (70) is provided and is configured to select the variable function from predetermined functions based on the data reception, preferably depending on at least one piece of information transmitted via the data reception.

3. Identification transmitter (10) according to one of the preceding claims,
**characterized in that**
the identification transmitter (10) is configured to define the variable function as at least one of the following functions, and preferably the at least one piece of information transmitted via the data reception is specific to at least one of the following functions and/or the predetermined functions comprise at least one of the following functions:
- a vehicle function, in particular for activating a function of the vehicle, preferably activating vehicle lighting and/or opening a tailgate and/or locking and/or unlocking,
- a safety-relevant vehicle function, in particular for activating a safety-relevant function of the vehicle, preferably unlocking and/or starting the engine and/or locating the vehicle and/or an autonomous driving function,
- a panic function, in particular for activating an alarm system of the vehicle and/or for activating an emergency call function,
- an emergency call function, preferably for initiating emergency call communication via a mobile communication interface (2d) of the vehicle (1) and/or the identification transmitter (10),
- a mobile communication and/or taxi-hailing function, preferably for initiating mobile communication via a mobile communication interface (2d) of the vehicle (1) and/or the identification transmitter (10),
- a function of the communication device (200), preferably a function of an app of the communication device (200),
- a smart home function, preferably for machine-to-machine communication and/or for communication with a smart home device via an interface device (20) of the identification transmitter (10) and/or an interface means (2) of the vehicle (1),
- an Internet-based function activation, preferably by initiating an Internet query and/or Internet communication, preferably via a mobile communication interface (211) of the identification transmitter (10) and/or a mobile communication and/or Internet interface (2d) of the vehicle (1),
- a garage door opening, preferably by transmitting a radio signal via a radio interface of the identification transmitter (10) and/or the vehicle (1),
- a lighting function, preferably by activating lighting of the vehicle (1), preferably initiated by transmitting an activation command via an interface device (20) of the identification transmitter (10) to the vehicle (1),
- a communication function, in particular a transmission of a data packet via at least one of the at least one interface device (20),
- a comfort function, preferably an activation of an auxiliary heater and/or seat heater and/or a climate control function of the vehicle (1),
- an automation function, preferably an activation of Internet-based programming and/or a control of further functions according to a predetermined activation schedule,
- an update function, preferably for overwriting operating software of the identification transmitter (10),
- an autonomous driving function, preferably for initiating an automatic parking maneuver and/or vehicle navigation,
- an assistant function, preferably performing an Internet-based search,
- a reporting function, preferably by means of voice output at the identification transmitter (10) and/or the vehicle (1),
- a vehicle search function, preferably by means of locating the vehicle (1).

4. Identification transmitter (10) according to one of the preceding claims,
**characterized in that**
a processing device (70) is interconnected with the at least one interface device (20) and/or the vehicle function control means (40) and the function control means (50), and in particular with the at least one memory element (60), to perform the activation of the vehicle function and/or the variable function via the at least one interface device (20).

5. Identification transmitter (10) according to one of the preceding claims,
**characterized in that**
the at least one interface device (20) is configured to provide at least one of the following data transmission technologies:
- Bluetooth,
- BLE,
- NFC,
- USB,
- WLAN,
- UWB,
and/or that, in addition to the at least one interface device (20) as a first interface device (20), at least one further interface device (20) is provided, in particular for communication with the vehicle (1), for activating the vehicle function and/or the variable function, which is configured to provide at least one of the following data transmission technologies:
- HF,
- LF,
- Bluetooth,
- BLE,
- WLAN,
- UWB.

6. Identification transmitter (10) according to one of the preceding claims,
**characterized in that**
the identification transmitter (10) is designed as a universal remote control, preferably as a universal radio transmitter,
and/or that the identification transmitter (10) is designed to activate at least one vehicle function as a safety-relevant vehicle function, which preferably comprises authentication with the vehicle (1) and/or transmission of a code to the vehicle (1).
Identification transmitter (10) according to one of the preceding claims,
**characterized in that**
the at least one interface device (20) and/or a further interface device (20) comprises the following interfaces:
- an interface for receiving a wake-up signal, preferably via LF or UWB,
- an interface for transmitting a response signal in reaction to the reception of the wake-up signal, preferably via HF or Bluetooth, to perform authentication with the vehicle (1).

7. A system for providing at least one function in a mobile identification transmitter (10) according to one of the preceding claims, comprising:
- the mobile identification transmitter (10) for activating at least one function in a vehicle (1), further comprising a function control means (50) for activating a variable function in addition to the at least one function, and a vehicle function control means (40) for activating the at least one vehicle function, wherein the respective associated vehicle function is predefined in a non-modifiable manner for the vehicle function control means (40),
- a mobile communication device (200) for mobile communication, wherein the communication device (200) comprises an interface (210) for data transmission (D) to the identification transmitter (10) in order to adapt the variable function,
wherein the communication device (200) is implemented as a mobile communication device in the form of a smartphone or tablet.

8. A method for providing at least one function in a mobile identification transmitter (10) according to any one of claims 1-7,
wherein the following steps are performed:
- transmitting information about a variable function of the identification transmitter (10) from a mobile communication device (200) to the identification transmitter (10), wherein the mobile communication device (200) is designed for telephony and in the form of a smartphone or tablet,
- activating the variable function based on the transmitted information in the identification transmitter (10), when a function control means (50) of the identification transmitter (10) is actuated, wherein the mobile identification transmitter (10) comprises a vehicle function control means (40) for activating the at least one vehicle function, wherein the respective associated vehicle function is predefined in a non-modifiable manner for the vehicle function control means (40).

9. Method according to one of the preceding claims,
**characterized in that**
the transmitted information comprises at least one of the following pieces of information:
- protocol information regarding a communication protocol for the variable function,
- a specification of the variable function,
- a collection of various possible variable functions,
- authentication information for authenticating the communication device (200) with the identification transmitter (10),
- update information for updating the execution of the variable function,
- an operating configuration, preferably a time duration for configuring the minimum operating duration of the function control means (50) until activation of the variable function,
- vehicle information for transmission to the vehicle (1) to provide the variable function at the vehicle (1).

10. Method according to one of the preceding claims,
**characterized in that**
the variable function is at least partially activated at the vehicle (1) and is executed by the vehicle (1) upon activation.

11. Method according to one of the preceding claims,
**characterized in that**
the variable function is activated by transmitting an activation command from an interface device (20) of the identification transmitter (10) to the vehicle (1) in order to initiate, in particular at the vehicle (1), the control of an interface means (2) for providing the variable function,
and/or that, upon activation, the variable function at least partially controls an interface (210) of the vehicle (1) for data transmission (D),
and/or that the variable function is adapted and/or exchanged and/or modified, in particular solely, by the transmitted information, such that various functions from predetermined functions are variably provided by the vehicle function control means (40), and are preferably reprogrammed and/or exchanged during operation of the identification transmitter (10) by the transmission of the information,
and/or that a system and/or identification transmitter (10) according to one of the preceding claims is operated.

## Revendications

1. Émetteur d'identification (10) destiné à activer au moins une fonction de véhicule dans un véhicule (1), comprenant :
- au moins un dispositif d'interface (20) destiné à recevoir des données provenant d'un appareil de communication mobile (200) pour la communication mobile, l'appareil de communication mobile (200) étant conçu pour la téléphonie et se présentant sous la forme d'un smartphone ou d'une tablette,
- au moins un moyen de commande de fonction du véhicule (40) destiné à activer ladite au moins une fonction du véhicule, la fonction du véhicule respectivement associée étant prédéfinie de manière immuable dans le moyen de commande de fonction du véhicule (40),
- au moins un moyen de commande de fonction (50) destiné à activer une fonction variable,
l'émetteur d'identification (10) étant conçu pour déterminer la fonction variable sur la base de la réception de données.

2. Émetteur d'identification (10) selon la revendication 1,
**caractérisé en ce que**
le au moins un moyen de commande de fonction du véhicule (40) et/ou le moyen de commande de fonction (50) comportent chacun un élément tactile qui s'étend au moins partiellement sur un boîtier (80) de l'émetteur d'identification (10) afin d'être actionné manuellement par un utilisateur de l'émetteur d'identification (10) pour activer la fonction du véhicule et/ou la fonction variable,
et/ou que l'émetteur d'identification (10) comporte au moins un élément de mémoire électronique (60) destiné à stocker de manière non volatile au moins une information relative à la fonction variable transmise lors de la réception de données,
et/ou qu'un dispositif de traitement (70) est prévu et est conçu pour sélectionner, sur la base de la réception de données, la fonction variable parmi des fonctions prédéfinies, de préférence en fonction d'au moins une information transmise via la réception de données.

3. Émetteur d'identification (10) selon l'une des revendications précédentes,
**caractérisé en ce que**
l'émetteur d'identification (10) est conçu pour définir la fonction variable comme au moins l'une des fonctions suivantes, et de préférence que la ou les informations transmises via la réception de données sont spécifiques à au moins l'une des fonctions suivantes et/ou que les fonctions prédéfinies comprennent au moins l'une des fonctions suivantes :
- une fonction du véhicule, en particulier pour l'activation d'une fonction du véhicule, de préférence l'activation de l'éclairage du véhicule et/ou l'ouverture d'un hayon et/ou le verrouillage et/ou le déverrouillage,
- une fonction du véhicule liée à la sécurité, en particulier pour l'activation d'une fonction du véhicule liée à la sécurité, de préférence un déverrouillage et/ou un démarrage du moteur et/ou une localisation et/ou une fonction de conduite autonome,
- une fonction de panique, en particulier pour l'activation d'un système d'alarme du véhicule et/ou pour l'activation d'une fonction d'appel d'urgence,
- une fonction d'appel d'urgence, de préférence pour initier une communication d'appel d'urgence via une interface de communication mobile (2d) du véhicule (1) et/ou de l'émetteur d'identification (10),
- une fonction de communication mobile et/ou d'appel de taxi, de préférence pour initier une communication mobile via une interface de communication mobile (2d) du véhicule (1) et/ou de l'émetteur d'identification (10),
- une fonction de l'appareil de communication (200), de préférence une fonction d'une application de l'appareil de communication (200),
- une fonction de maison intelligente, de préférence pour la communication machine-à-machine et/ou pour la communication avec un appareil de maison intelligente via un dispositif d'interface (20) de l'émetteur d'identification (10) et/ou un moyen d'interface (2) du véhicule (1),
- une activation de fonction basée sur Internet, de préférence par le lancement d'une requête Internet et/ou d'une communication Internet, de préférence via une interface de communication mobile (211) de l'émetteur d'identification (10) et/ou une interface de communication mobile et/ou Internet (2d) du véhicule (1),
- une ouverture de porte de garage, de préférence par l'émission d'un signal radio via une interface radio de l'émetteur d'identification (10) et/ou du véhicule (1),
- une fonction d'éclairage, de préférence par l'activation de l'éclairage du véhicule (1), de préférence déclenchée par la transmission d'une commande d'activation via un dispositif d'interface (20) de l'émetteur d'identification (10) vers le véhicule (1),
- une fonction de communication, en particulier la transmission d'un paquet de données via au moins l'un des dispositifs d'interface (20),
- une fonction de confort, de préférence l'activation d'un chauffage auxiliaire et/ou d'un chauffage des sièges et/ou d'une fonction de climatisation du véhicule (1),
- une fonction d'automatisation, de préférence l'activation d'une programmation basée sur Internet et/ou la commande d'autres fonctions selon un plan d'activation prédéfini,
- une fonction de mise à jour, de préférence pour écraser un logiciel d'exploitation de l'émetteur d'identification (10),
- une fonction de conduite autonome, de préférence pour lancer une manœuvre de stationnement automatique et/ou une navigation du véhicule,
- une fonction d'assistance, de préférence l'exécution d'une recherche sur Internet,
- une fonction de rapport, de préférence au moyen d'une sortie vocale au niveau de l'émetteur d'identification (10) et/ou du véhicule (1),
- une fonction de recherche de véhicule, de préférence au moyen d'une localisation du véhicule (1).

4. Émetteur d'identification (10) selon l'une des revendications précédentes,
**caractérisé en ce qu'**
un dispositif de traitement (70) est interconnecté avec le au moins un dispositif d'interface (20) et/ou le moyen de commande de fonction du véhicule (40) et le moyen de commande de fonction (50), et en particulier avec le ou les éléments de mémoire (60), afin d'effectuer l'activation de la fonction du véhicule et/ou de la fonction variable via le ou les dispositifs d'interface (20).

5. Émetteur d'identification (10) selon l'une des revendications précédentes,
**caractérisé en ce que**
le au moins un dispositif d'interface (20) est conçu pour fournir au moins l'une des technologies de transmission de données suivantes :
- Bluetooth,
- BLE,
- NFC,
- USB,
- WLAN,
- UWB,
et/ou **en ce qu'**en plus du au moins un dispositif d'interface (20) en tant que premier dispositif d'interface (20), il est prévu au moins un autre dispositif d'interface (20), en particulier pour la communication avec le véhicule (1), pour l'activation de la fonction du véhicule et/ou de la fonction variable, lequel est conçu pour fournir au moins l'une des technologies de transmission de données suivantes :
- HF,
- LF,
- Bluetooth,
- BLE,
- WLAN,
- UWB.

6. Émetteur d'identification (10) selon l'une des revendications précédentes,
**caractérisé en ce que**
l'émetteur d'identification (10) est conçu comme une télécommande universelle, de préférence comme un émetteur radio universel,
et/ou que l'émetteur d'identification (10) est conçu pour activer au moins une fonction du véhicule en tant que fonction du véhicule liée à la sécurité, laquelle comprend de préférence une authentification auprès du véhicule (1) et/ou l'envoi d'un code au véhicule (1).
Émetteur d'identification (10) selon l'une des revendications précédentes,
**caractérisé en ce que**
le ou les dispositifs d'interface (20) et/ou un autre dispositif d'interface (20) comprennent les interfaces suivantes :
- une interface pour la réception d'un signal de réveil, de préférence via LF ou UWB,
- une interface pour l'émission d'un signal de réponse en réaction à la réception du signal de réveil, de préférence via HF ou Bluetooth, afin d'effectuer une authentification auprès du véhicule (1).

7. Système destiné à fournir au moins une fonction à un émetteur d'identification mobile (10) selon l'une des revendications précédentes, comprenant :
- l'émetteur d'identification mobile (10) destiné à activer au moins une fonction sur un véhicule (1), comprenant en outre un moyen de commande de fonction (50) pour activer une fonction variable en plus de ladite au moins une fonction, et un moyen de commande de fonction du véhicule (40) pour activer ladite au moins une fonction du véhicule, la fonction du véhicule respectivement associée étant prédéfinie de manière immuable dans le moyen de commande de fonction du véhicule (40),
- un appareil de communication mobile (200) destiné à la communication mobile, l'appareil de communication (200) comportant une interface (210) pour la transmission de données (D) vers l'émetteur d'identification (10) afin d'adapter la fonction variable, l'appareil de communication (200) étant réalisé sous la forme d'un appareil de communication mobile tel qu'un smartphone ou une tablette.

8. Procédé pour fournir au moins une fonction sur un émetteur d'identification mobile (10) selon l'une des revendications 1 à 7,
dans lequel les étapes suivantes sont exécutées :
- transmission d'une information concernant une fonction variable de l'émetteur d'identification (10) depuis un appareil de communication mobile (200) vers l'émetteur d'identification (10), l'appareil de communication mobile (200) étant conçu pour la téléphonie et se présentant sous la forme d'un smartphone ou d'une tablette,
- activation de la fonction variable sur la base de l'information transmise au niveau de l'émetteur d'identification (10), lorsqu'un moyen de commande de fonction (50) de l'émetteur d'identification (10) est actionné, l'émetteur d'identification mobile (10) comportant un moyen de commande de fonction du véhicule (40) destiné à activer la au moins une fonction du véhicule, la fonction du véhicule respectivement associée étant prédéfinie de manière immuable au niveau du moyen de commande de fonction du véhicule (40).

9. Procédé selon l'une des revendications précédentes,
**caractérisé en ce que**
les informations transmises comprennent au moins l'une des informations suivantes :
- une information de protocole concernant un protocole de communication pour la fonction variable,
- une spécification de la fonction variable,
- un ensemble de différentes fonctions variables possibles,
- une information d'authentification pour l'authentification de l'appareil de communication (200) auprès de l'émetteur d'identification (10),
- une information de mise à jour pour actualiser l'exécution de la fonction variable,
- une configuration de commande, de préférence une durée pour configurer la durée minimale de commande du moyen de commande de fonction (50) jusqu'à l'activation de la fonction variable,
- une information relative au véhicule destinée à être transmise au véhicule (1) pour la mise à disposition de la fonction variable sur le véhicule (1).

10. Procédé selon l'une des revendications précédentes,
**caractérisé en ce que**
la fonction variable est activée au moins en partie au niveau du véhicule (1) et est exécutée par le véhicule (1) lors de son activation.

11. Procédé selon l'une des revendications précédentes,
**caractérisé en ce que**
la fonction variable est activée par la transmission d'une commande d'activation depuis un dispositif d'interface (20) de l'émetteur d'identification (10) vers le véhicule (1), afin notamment de déclencher, au niveau du véhicule (1), la commande d'un moyen d'interface (2) pour la mise à disposition de la fonction variable,
et/ou que, lors de son activation, la fonction variable commande au moins en partie une interface (210) du véhicule (1) pour la transmission de données (D),
et/ou que la fonction variable est adaptée et/ou remplacée et/ou modifiée, notamment uniquement, par l'information transmise, de sorte que différentes fonctions parmi des fonctions prédéfinies sont mises à disposition de manière variable par le moyen de commande de fonction du véhicule (40), et sont de préférence reprogrammées et/ou remplacées pendant le fonctionnement de l'émetteur d'identification (10) par la transmission de l'information,
et/ou qu'un système et/ou un émetteur d'identification (10) selon l'une des revendications précédentes est mis en œuvre.
